## Europäisches Patentamt
## European Patent Office
## Office européen des brevets

(19)

(11) Veröffentlichungsnummer: **0 177 657**
**B1**

(12)

# EUROPÄISCHE PATENTSCHRIFT

(45) Veröffentlichungstag der Patentschrift:
**11.05.88**

(51) Int. Cl.⁴: **F 24 D 13/00**, F 24 D 5/02,
F 24 F 7/08

(21) Anmeldenummer: **84810486.5**

(22) Anmeldetag: **08.10.84**

(54) **System zur Deckung des Energiebedarfes eines Raumes.**

(43) Veröffentlichungstag der Anmeldung:
**16.04.86 Patentblatt 86/16**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
EP - A - 0 117 885
DE - A - 2 548 775
DE - A - 2 940 830
DE - A - 3 037 092
US - A - 4 300 441

(RUNTE)
WÄRME, Band 88, Nr. 2, April 1982, Gräfeling, DE;
"Sparsame Bürobauten", Selten 54,56
BAUPHYSIK, Band 4, Nr. 6, Dezember 1982 Berlin, DE;
P.G. GILLI "Wärmerückgewinnung mittels poröser
durchströmter Außenbauteile-Berechnungsverfahren
und Fallstudie", Selten 203-208

(73) Patentinhaber: **Gellinger AG, Werkstrasse 20,
CH-8401 Winterthur (CH)**

(72) Erfinder: **Keller, Bruno, Dr., Schmelzbergstrasse 55,
CH-8044 Zürich (CH)**
Erfinder: **Gellinger, Peter, Seidenstrasse 12,
CH-8400 Winterhur (CH)**

(74) Vertreter: **Gäbel, Walter Dr., Wingertstrasse 17,
CH-8542 Wiesendangen (CH)**

EP 0 177 657 B1

## Beschreibung

Die Erfindung betrifft ein System zur Deckung des Energiebedarfes eines Raumes in einem Gebäude, dessen Räume durch, vorzugsweise an der Decke verteilte, Beleuchtungskörper mit Kunstlicht, sowie über Fenster in mindestens einer der Aussenwände mit Tageslicht beaufschlagt und mit Hilfe einer Lüftungsanlage mit frischer Zuluft versorgt sind, wobei die Temperatur der zugeführten Frischluft höchstens gleich der gewünschten Raumtemperatur ist.

Die Aussenwände von Gebäuden bestehen im allgemeinen teilweise aus durchsichtigen Bauteilen, z.B. Fenstern, und teilweise aus undurchsichtigen Wandteilen, z.B. Fassadenplatten oder Mauerwerk und dergleichem; beide genannten Teile zeigen erhebliche Unterschiede im Wärmedämmvermögen: Für herkömmliche Fenster betragen die Wärmedurchgangszahlen (k-Werte) bis zu sechsmal so viel (1,0 bis 2,8 $W/m^2 \cdot K$) wie für die undurchsichtigen Wandteile (0,3 bis 0,5 $W/m^2 \cdot K$). Infolgedessen weisen Verglasungen an kalten Tagen eine niedrigere Oberflächentemperatur auf als die anderen Teile der Aussenwand. Das führt zu einem Kaltluftabfall vor dem Fenster und zu Zugerscheinungen, sowie einem einseitigen Strahlungsdefizit für die Rauminsassen. Um für diese den erwünschten Komfort zu gewährleisten, werden Heizanlagen, wie Radiatoren, Konvektoren, zusätzliche Bodenheizungen usw., unter den Fenstern angeordnet, um mit dem dadurch erzeugten Warmluftvorhang die Auswirkungen der kalten Fensteroberfläche zu kompensieren.

Mit diesen Massnahmen und Anordnungen sind verschiedene, schwerwiegende Nachteile verbunden:

— Es sind umfangreiche und komplizierte Installationen erforderlich mit Heizleitungen, die bis an die Peripherie des Gebäudes herangeführt werden müssen,

— durch die Anordnung von Heizungsinstallationen wird die Nutzung im Fensterbereich stark beeinträchtigt,

— durch den Warmluftvorhang werden die Temperaturdifferenz und der Wärmeübergang am Fenster erhöht, was zu erhöhten Energieverlusten am Fenster führt.

Ein System der eingangs genannten Art ist aus der CH-A-555 519 bekannt. Bei diesem bekannten System wird die in einer Zentrale aufbereitete Zuluft, die aus aus der Atmosphäre entnommener Frischluft, unter Umständen gemischt mit Umluft, besteht, über einer Zwischendecke eingeblasen und tritt von oben, zumindest weitgehend gleichmässig verteilt, durch eine als Lochdecke ausgebildete Zwischendecke in den Raum ein. Diese Zuluft hat dabei höchstens eine Temperatur, die einer Basis- oder Komforttemperatur von 20 - 22°C entspricht; sie dient neben der Lufterneuerung und -befeuchtung im Bedarfsfalle der Kühlung des Raumes.

Um in der kalten Jahreszeit die Transmissionsverluste nach aussen und den Kaltluftabfall vor dem Fenster zu kompensieren, sind, wie vorstehend für mit der bisherigen Technik versehene Gebäude erwähnt, vor den Fenstern Radiatoren einer konventionellen Heizungsanlage als Wärmequellen aufgestellt, die im Winter das Energiedefizit des Raumes decken.

Die Abführung der Fort- oder Abluft erfolgt unmittelbar unter der Zwischendecke.

Da bei diesem System die Zuluft für die Deckung des Kühlbedarfes und, beispielsweise bei sehr tiefen Aussentemperaturen, eventuell zur teilweisen Deckung des Heizbedarfes dient, müssen entsprechend den grossen Belastungen bisheriger Bauten durch die Fenster mit der Zuluft grosse «Leistungen» transportiert werden, was grosse Zuluftmengen und relativ viele Luftwechsel/Stunde erfordert. Die von oben eingeblasene Zuluft wird dabei durch Induktion und Turbulenz möglichst vollständig mit der vorhandenen Raumluft vermischt, wobei die Einblasung so erfolgt, dass die Komfortbedingungen, z.B. nach DIN 1946, im Aufenthaltsbereich von Personen eingehalten werden. Durch die Entnahme der Abluft ebenfalls in Deckennähe arbeitet das System im Kurzschlussbetrieb.

Wie erwähnt, sind hohe Luftwechselzahlen von 3 bis 8 Luftwechseln/h erforderlich, da die Raumluft nur indirekt über Induktion und Turbulenz ausgetauscht wird. Darüberhinaus ist das bekannte System vom lufthygienischen Standpunkt her gesehen relativ wenig wirksam, da die Schadstoffe, die im Raum entstehen, zuerst gleichmässig verteilt werden, bevor sie aus dem Raum entfernt werden; die Schadstoffbeseitigung basiert also auf dem Prinzip der Verdünnung. Dies bedingt einen relativ hohen Frischluftanteil an der Zuluft, um die Schadstoffkonzentration niedrig zu halten, was, besonders im Winterbetrieb, einen hohen Energiebedarf zu Folge hat, woran auch eine verfeinerte Regelung, die zum Beispiel $CO_2$- oder belegungsgesteuert sein kann, nur wenig ändert.

Der Erfindung liegt daher die Aufgabe zugrunde, ein, besonders in Hinsicht auf die Schadstoffbeseitigung, verbessertes Gebäude- und Lüftungssystem zu schaffen, bei dem

— der Energiebedarf sowohl für die Deckung der Transmissionsverluste im Heinzbetrieb als auch für die Kühlung mittels der Zuluft erheblich verringert ist,

— eine hohe Luftqualität mit relativ geringem Frischluftanteil — der im allgemeinen aufgeheizt oder gekühlt werden muss — gewährleistet und

— ein hoher Komfort auch bei möglichst kleiner Luftwechselzahl sichergestellt ist.

Diese Aufgabe wird erfindungsgemäss dadurch gelöst, dass die Wärmedurchgangszahl (der Gesamt-k-Wert) des gesamten Fensters und die Wärmedurchgangszahl der undurchsichtigen Wandteile der Aussenwände des Gebäudes je höchstens einen Wert von 1 $W/m^2 \cdot K$ haben, und dass die Zuluftzuführung, über mindestens eine der Wände des Raumes verteilt, in Bodennähe erfolgt, und die Einblasgeschwindigkeit für die Zuluft in den Raum einen Maximalwert von 0,2 m/sec nicht übersteigt.

Die Wärmedurchgangszahl des gesamten Fensters, der Gesamt-k-Wert, setzt sich zusammen aus den beiden Einzel-k-Werten für die Verglasung und für den Rahmen; der Gesamt-k-Wert kann dabei entweder gesamthaft experimentell bestimmt oder als arithmetischer Mittel-Wert aus den Einzel-k-Werten berechnet werden, wobei diese entsprechend den Flächenanteilen von Verglasung und Rahmen anteilmässig in die Rechnung eingehen.

Mit diesen Massnahmen wird erreicht, dass im Heizbetrieb während der Belegungszeiten die Transmissionsverluste durch innere Wärmequellen — Menschen, Beleuchtung, Apparate und Maschinen — sowie durch allfällige Einstrahlung gedeckt werden, und somit das Lüftungssystem von einer Heizfunktion — auch ohne spezielle Heizkörper — entlastet ist. Damit kann im Heizbetrieb die Zuluftzufuhr bei Komforttemperatur erfolgen; Luftführung und -menge können im Hinblick auf eine optimale lufthygienische Wirkung gewählt werden. Wegen der geringen benötigten Menge besteht die Zuluft ganz oder zumindestens zum allergrössten Teil aus atmosphärischer Frischluft, die mit sehr geringer Geschwindigkeit und entsprechend kleinen Luftwechselzahlen — im Heizbetrieb von n = 0,5 - l/h — einfliesst; die Schadstoffe werden dabei langsam zur Decke hin geschoben, wo sie abgeführt werden. Dabei kommt die natürliche, durch den Menschen und Apparate verursachte Thermik positiv zur Wirkung.

Das neue System arbeitet also nach dem Prinzip, einen thermisch stabilen und temperaturgerechten Frischluft«see» mit Komforttemperatur von 20 - 22°C in Bodennähe zu schaffen; aus diesem «schöpft» dann die — durch Menschen, Maschinen und allfällige Einstrahlungen — erzeugte Thermik. Da die menschlich erzeugten Luftverunreinigungen im allgemeinen bei höherer Temperatur anfallen, gehen sie mit der Thermik nach oben, wo sie als Fort- oder Abluft abgesaugt werden. Alle inneren Wärmequellen sowie ein Strahlungseinfall durch die Fenster tragen zur Stabilisierung der geschilderten Luftströmung bei, indem sie die Temperaturdifferenz zwischen den oberen und den unteren Luftschichten vergrössern.

Ohne eine konventionelle Zusatzheizung vor den Fenstern ist eine solche Betriebsweise nur möglich, weil wegen der gleichen k-werte, insbesondere der Fenster, die inneren Quellen und eine allfällige Einstrahlung genügen, um die Zuluft von einer Heiz- und Energietransportfuktion zu entlasten, d.h. die Transmissionsverluste auch im Extremfall decken; dazu muss der Kaltluftabfall an den Aussenwänden, insbesondere an den Fenstern auch im Extremfall im Bereich der Komfortbedingungen liegen, d.h. zum Beispiel die Temperaturdifferenz des Fensters gegen den Raum darf nicht grösser sein als 3 - 4°C; denn die Fensteroberflächentemperatur muss als normalerweise tiefste Oberflächentemperatur der Aussenwände so hoch liegen, dass überhöhte Lufttemperaturen zur Kompensation von Abstrahlungsverlusten der Menschen nicht notwendig sind. Diese Forderungen werden mit Aussenwänden erfüllt, deren k-Werte die im Anspruch 1 vorgeschriebenen Werte haben.

Die niedrigen k-Werte das Fenster können beispielsweise durch über eine Verglasung hinausgehende Mehrfachverglasungen oder durch die Massnahmen erreicht werden, die in der EP-A-117 885 beschrieben sind; eine weitere Möglichkeit besteht in der Verwendung von hochwärmedämmenden und hochtransparenten Stoffen, zum Beispiel Aerogelen, zwischen den Scheiben. Die Einhaltung der k-Werte für die Wandteile erfolgt mit Hilfe von bekannten Wärmedämm-Massnahmen und/oder -Materialien. Sollten in Sonderfällen an Decke, Fussboden oder Innenwänden wärmedämmende Massnahmen erforderlich sein, so sind die k-Werte dieser Elemente selbstverständlich an diejenigen der Aussenwände angepasst.

Während Zeiten, in denen der Raum nicht belegt ist — Nacht, Wochenende und Feiertage —, ist die Auskühlgeschwindigkeit so klein, dass meist auf eine Heizung verzichtet werden kann; ein allfällig auftretender Heizbedarf kann zur Aufrechterhaltung einer gewünschten Raumtemperatur durch einfache und billige Zusatzheizeinrichtungen von geringer Leistung gedeckt werden. Hierfür hat es sich als zweckmässig erwiesen, wenn in den Beleuchtungskörpern zusätzlich elektrische Heizstäbe angeordnet sind, deren Leistung mindestens annähernd der elektrischen Leistung des jeweiligen Beleuchtungskörpers entspricht. Es kann jedoch beispielsweise auch eine Einrichtung zur Luftumwälzung mit einer Lufterwärmung vorgesehen sein. Der Einsatz von Zusatzheizungen ist durch keinerlei Komfortbedingungen beschränkt, so dass diese Heizeinrichtungen sehr einfach gehalten und im Intervallbetrieb eingesetzt werden können.

Die für den Kühlbetrieb notwendige «Kälte» wird bei dem neuen System in bekannter Weise über die Zu- oder Frischluft «zugeführt»; ihre Temperaturdifferenz zur gewünschten Raumtemperatur ist aus Gründen des Komforts jedoch begrenzt und sollte 10 bis 12°C nicht überteigen. Zur Deckung des Kältebedarfs wird daher die Luftwechselzahl pro Stunde (n/h) entsprechend den Erfordernissen bis zur maximal zulässigen Einblasgeschwindigkeit für die Zuluft erhöht. Zu einer geringen Kühlleistung, d.h. einem relativ kleinen, mit der Zuluft aus dem Raum zu entfernenden Wärmeanfall, trägt dabei entscheidend bei, dass die Wärmebelastung des Raumes durch das Fenster — wegen dessen niedrigen k-Wertes und eines geringen Gesamtenergiedurchlasses, der, gegebenenfalls mit Hilfe zusätzlicher Sonnenschutzmassnahmen erreicht wird — gering ist. Dadurch ist es möglich die Luftwechselzahl auch im Sommer auf maximal etwa n = 3/h zu begrenzen und im allgemeinen darunter zu halten; für derart geringe Luftwechselzahlen werden, bei sinnvollen Abmessungen des Einblasquerschnittes, Einblasgeschwindigkeiten < 20 cm/sec benötigt. Da die abzuführende warme Luft infolge der Thermik nach oben steigt, hat sich hier die bekannte Absaugung an der Decke — in Verbindung mit der Einblasung in Bodennähe besonders bewährt; dadurch wird der im Zusammenhang mit der bekannten Anordnung diskutierte «Kurzschlussbetrieb» vermieden. Darüberhinaus bewirkt eine Anordnung der Abluftöffnungen in der Nähe der Aussenwand bzw. des Fensters, dass die am Fenster entstehende Warmluft direkt abfliessen kann.

Weiterhin erfolgt der Wegtransport der Schadstoffe — sowohl im Sommer- als auch im Winterbetrieb — aufgrund eines stetigen Abströmens nach oben und nicht aufgrund allmählicher Verdünnung.

Vorteilhafterweise betragen die maximalen Zulufttemperatur 20 - 22°C und die Einblasgeschwindigkeit 0,15 m/sec.

Die Zuluftmenge kann zudem zur weiteren Energieeinsparung auf verschiedene Arten gesteuert werden, zum Beispiel

– auf einen konstanten Volumenfluss während der Betriebszeit;

– mit variablem Volumenfluss, gesteuert durch den $CO_2$- oder Feuchtegehalt der Fortluft;

– mit variablem Volumenfluss, gesteuert durch die Anzahl der im Raum vorhandenen Personen;

– mit variablem Volumenfluss, gesteuert durch die Temperatur der Fortluft.

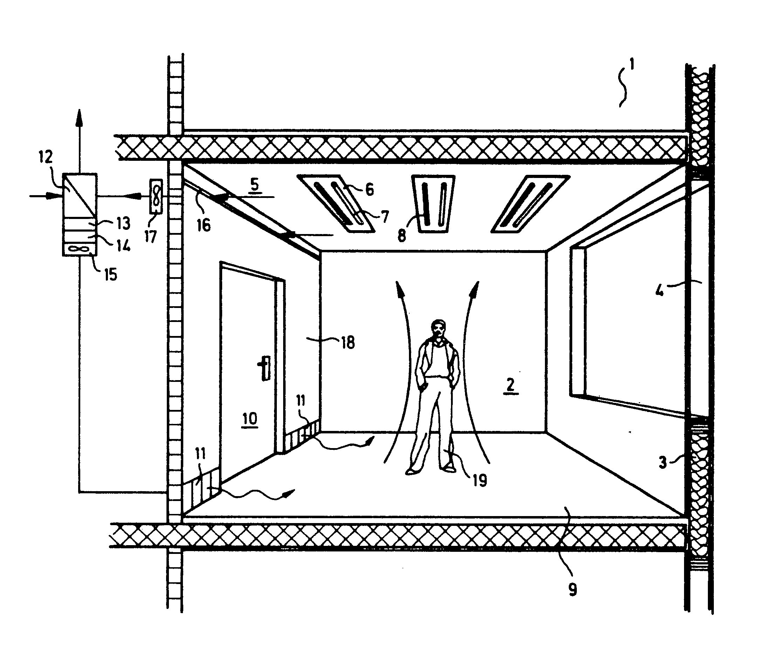

Im folgenden wird die Erfindung anhand eines Ausführungsbeispiels im Zusammenhang mit der Zeichnung näher erläutert.

Die einzige Figur zeigt schematisch in einer räumlichen Skizze einen erfindungsgemäss ausgestatteten Raum in einem Gebäude.

Als Ausschnitt aus einem grösseren Gebäude 1 zeigt die Figur einen Raum 2, der auf drei Seiten und nach oben und unten von gleichartigen Räumlichkeiten bzw. von einem Korridor umgeben ist, was nicht weiter dargestellt ist. Auf der rechten Seite ist der Raum 2 durch eine Aussenwand 3 abgeschlossen, in der ein Fenster 4 vorhanden ist.

In der Decke 5 des Raumes 2 befinden sich in Abständen voneinander angeordnete Strahlungsreflektoren 6, in denen je eine Leuchtstoffröhre als Beleuchtungskörper 7 und ein handelsüblicher Heizstab, beispielsweise aus Keramik, als Heizkörper 8 installiert sind. Jeder Reflektor 6 bzw. jeder Strahlungskörper 7 bzw. 8 in ihm ist, einzeln und getrennt, von Hand ein- und ausschaltbar.

Die Beleuchtungskörper 7 und die Heizkörper 8 sind so ausgewählt, dass die von ihnen aufgenommene Leistung gleich ist. Sie beträgt beispielsweise 25 W/m$^2$ Raumfläche. Die Leistungsaufnahme in den einzelnen Reflektoren 6 kann dabei ebenfalls gleich, aber auch verschieden sein.

Weiterhin sind Beleuchtungs- und Heizkörper 7 und 8 eines Reflektors 6 — im einfachsten Fall über einen von Hand zu betätigenden Umschalter — in ihrer elektrischen Schaltung so miteinander gekoppelt, dass in einem Reflektor 6 wahlweise nur der eine oder der andere der beiden energieabgebenden Strahler 7 bzw. 8 in Betrieb stehen kann.

In der Nähe des Bodens 9 befinden sich in der mit einer Tür 10 ausgestatteten Wand 18 des Raumes zum Korridor Ausblasgitter 11 einer Lüftungsanlage, die nur schematisch angedeutet ist. Die Lüftungsanlage ist mit einer zentralen Luftaufbereitung ausgerüstet, von der nur ein Wärmetauscher 12 für eine Wärmerückgewinnung aus der Abluft des Raumes 2, ein, vorzugsweise elektrisch beheizter, Lufterwärmer 13 und ein Luftkühler 14 sowie als Fördereinrichtung für die Zuluft ein Ventilator 15 skizziert sind. Der Ventilator saugt Frischluft an, die nach vorheriger Filterung gegebenenfalls erwärmt oder gekühlt wird, ehe sie dem Ausblasegitter 11 zuströmt; die Erwärmung der Frischluft erfolgt dabei mindestens zum Teil durch Wärmerückgewinnung aus der Abluft im Wärmetauscher 12.

Das Ausblasgitter 11 erstreckt sich, durch die 1 m breite Tür 10 in zwei Teilgitter unterteilt, über die ganze Breite des 5 m breiten, 4 m tiefen und 3 m hohen Raumes 2. Es ist mit einem nicht gezeigten Filtertuch oder einem feinmaschigen Metallgitter hinterlegt, so dass sein Strömungswiderstand erheblich grösser ist als derjenige in seiner Zuführungsleitung; daher baut sich in den Zuführungsleitungen in Strömungsrichtung vor dem Ausblasgitter 11 ein statischer Luftdruck auf, der eine gleichmässige Verteilung der in den Raum 2 austretenden Zuluft über die ganze Länge der Ausblasgitter 11 sicherstellt.

Wenig unterhalb der Decke 5 sind in der gleichen Wand 18 ein über die ganze Breite verlaufender Abluftschlitz 16 oder mehrere Öffnungen angeordnet, durch den bzw. die die verbrauchte, mit Schadstoffen und gegebenenfalls überschüssiger Wärme beladene Fortluft von einem Abluftventilator 17 abgesaugt und dem Wärmetauscher 12 als wärmeabgebendes Medium zugeführt wird; in diesem gibt die Abluft, falls erforderlich, Wärme an die einströmende Frischluft ab, ehe sie aus dem Gebäude 1 wegtransportiert wird. Mit Vorteil kann der Abluftschlitz 16 auch oberhalb des Fensters 4 im Bereich der Aussenwand 3 liegen, was nicht ausdrücklich gezeigt ist.

Die durch menschliche Thermik, symbolisiert in einer stehenden Person 19, im Raum 2 «angetriebene» Luftströmung ist durch Pfeile angedeutet.

*Berechnungsbeispiel*

Aus den genannten Abmessungen ergibt sich das Volumen V des Raumes 2 zu 60 m$^3$; seine Aussenwandfläche beträgt 15 m$^2$, wovon 10 m$^2$ Fenster- und 5 m$^2$ Brüstungsfläche. Das Fenster 4 ist doppeltverglast, und sein k-Wert ist durch Ausspannen von durchsichtigen, beschichteten Kunststoffolien zwischen den Scheiben auf etwa 0,7 W/m$^2$ · K abgesenkt, während derjenige der undurchsichtigen Teile der Aussenwand 3 0,5 W/m$^2$ · K beträgt.

Daraus ergeben sich im Winter Transmissionsverluste für das Fenster 4 von 7 W/K und für die Brüstung von 2,5 W/K, insgesamt also 9,5 W/K. Daraus errechnet sich bei einer Auslegungstemperatur von 10°C und einem Komfortwert für die Raumtemperatur von +22°C eine Verlustleistung durch Transmission von maximal 304 W.

Die im Raum 2 installierte Beleuchtungs- bzw. Heizleistung ist demgegenüber 500 W, so dass die Transmissionsverluste reichlich gedeckt werden können.

Darüberhinaus liefert während der Belegung ein Mensch etwa 80 W; ohne Einstrahlung von Tageslicht muss die Beleuchtung eingeschaltet werden, so dass die Wärmeproduktion im Raum 2 580 W beträgt, wodurch sich eine beträchtliche Überwärmung der Fortluft ergibt, was eine Erwärmung der Frischluft mittels Wärmerückgewinnung ermöglicht. Während Belegzeiten genügt daher bei einer mittleren Energietransmission für die Einstrahlung von g = 0,32 in den Raum 2 durch das Fenster 4 bereits eine Strahlungsintensität von 70 W pro m$^2$ um die Transmissionsverluste zu decken. Dies entspricht der Einstrahlung eines stark bedeckten Himmels, bei dem ohnehin zusätzlich Teile der Beleuchtung eingeschaltet sein müssen.

Unter der Annahme, dass 2/3 der Breite des Ausblasgitters 11 in lichten Schlitzweiten besteht, und die Höhe $h_S$ der Schlitze 0,1 m ist, beträgt der für das Einblasen der Zuluft verfügbare Strömungsquerschnitt A = 2667 cm². Für einen ausreichenden Abtransport der Schadstoffe sind im Winter etwa n = 0,5 - l/h Luftwechsel erforderlich. Hieraus resultieren für die Frischluftversorgung des Raumes 2 Luftmengen von 8333 - 16'667 cm³/sec, wofür bei der angenommenen Ausblasöffnung Strömungsgeschwindigkeiten von 3,1 - 6,3 cm/sec notwendig sind; diese Geschwindigkeiten liegen weit unter den für Komfortbedingungen zulässigen maximalen Einblasgeschwindigkeiten.

Für die Aufwärmung der Frischluft benötigt man bei einer Wärmerückgewinnung von 65%, ausgehend von der Auslegungstemperatur von 10°C, bei einem Luftwechsel von n = 0,5/h zusätzlich eine Leistung von 112 W, welche allenfalls durch Vorerwärmung der Frischluft aufgebracht werden kann.

Während Nichtbetriebszeiten fallen die gleichen Transmissionsverluste an, für allfällige Undichtheiten sei ein Luftwechsel von n = 0,1/h angenommen; somit ergeben sich hier Gesamtverluste von etwa 368 W, die von den installierten Heizstäben 8 ohne weiteres aufgebracht werden können; diese können dabei, alle oder nur ein Teil davon, beispielsweise von einer Schaltuhr oder von einem Raumthermostaten in Abhängigkeit von der Temperatur gesteuert, im intermittierenden Betrieb eingesetzt werden. Im Zusammehang mit der Deckung der Energieverluste während Nichtbetriebszeiten sei noch erwähnt, dass während längerer Betriebsunterbrüche mit ins gewicht fallenden Einstrahlungen während des Tages gerechnet werden kann, die mit Hilfe des Speichervermögens des Gebäudes einen zusätzlichen Beitrag zur Deckung der Verluste leisten.

Im Kühl- oder Sommerbetrieb kann die Einblasschwindigkeit der Zuluft in den Raum 2 bis auf v = 20 cm/sec erhöht werden, ohne dass Zugerscheinungen und damit Komforteinbussen befürchtet werden müssen; zudem sinkt die Geschwindigkeit der Zuluft infolge Vermischung mit der Raumluft relativ schnell ab, und die Luftbewegungen im Raum werden im überwiegenden Masse von den thermischen Verhältnissen bestimmt.

Auch in diesem Fall bewähren sich der niedrige k-Wert des Fensters 4 und sein relativ geringer Unterschied zu demjenigen der restlichen Aussenwand 3. Besonders in Verbindung mit weiteren bekannten Sonnenschutzmassnahmen — beispielsweise Sonnenstoren und/oder reflektierenden Beschichtungen an den Scheiben des Fensters 4 — wird dadurch erreicht, dass das Fenster 4 bzw. die Aussenwand 3 nicht die dominierende «Wärmequelle» während des Kühlbetriebs bilden und auch die Luftströmung im Raum 2 nicht zu stark beeinflussen. Auf diese Weise reichen die erfindungsgemäss zulässigen Einblasgeschwindigkeiten, mit denen gekühlte Zuluft, deren Temperatur bis zu 12°C unter der gewünschten Raumtemperatur liegen kann, in den Raum eingeblasen wird für einen Abtransport der über die Komfortbedingungen — die bekanntlich eine Raumtemperatur bis zu 6°C unter der Aussentemperatur zulassen — hinausgehenden Wärme aus.

Legt man die bereits genannten Grenzwerte für die Einblasgeschwindigkeit und die Temperatur der gekühlten Zuluft zugrunde, so ist der sekundliche Zuluftstrom grösser 53'000 cm³/sec; aus dieser Luftmenge errechnet sich für den Raum 2 eine Luftwechselzahl n < 3/h. Bei einer Temperaturdifferenz von 12°C zwischen Zuluft und Raumluft lassen sich damit 640 W an Überschusswärme abführen.

**Patentansprüche**

1. System zur Deckung des Energiebedarfes eines Raumes in einem Gebäude, dessen Räume durch, vorzugsweise an der Decke verteilte, Beleuchtungskörper mit Kunstlicht, sowie über Fenster in mindestens einer der Aussenwände mit Tageslicht beaufschlagt und mit Hilfe einer Lüftungsanlage mit frischer Zuluft versorgt sind, wobei die Temperatur der zugeführten Zuluft höchstens gleich der gewünschten Raumtemperatur ist, dadurch gekennzeichnet, dass die Wärmedurchgangszahl (der Gesamt-k-Wert $k_F$) des gesamten Fensters (4) und die Wärmedurchgangszahl ($k_W$) der undurchsichtigen Wandteile der Aussenwände (3) des Gebäudes (1) je höchstens einen Wert von 1 W/m² · K haben, und dass die Zuluftzuführung (11), über mindestens eine der Wände (18) des Raumes (2) verteilt, in Bodennähe (9) erfolgt und die Einblasgeschwindigkeit für die Zuluft in den Raum (2) einen Maximalwert von 0,2 m/sec nicht übersteigt.

2. System nach Anspruch 1, dadurch gekennzeichnet, dass die maximale Zulufttemperatur 22°C und die Einblasgeschwindigkeit 0,15 m/sec betragen.

3. System nach Anspruch 1 oder 2, dadurch gekennzeichnet, dass die Abluftabsaugung (16) der Lüftungsanlage (11 - 17) in der Decke (5) nahe der Aussenwand bzw. -wände angeordnet ist und sich über mindestens 80%, der Aussenwandbreite erstreckt.

4. System nach einem der vorhergehenden Ansprüche, dadurch gekennzeichnet, dass in den Beleuchtungskörpern (7) zusätzlich elektrische Heizstäbe (8) angeordnet sind, deren Leistung mindestens annähernd der elektrischen Leistung des jeweiligen Beleuchtungskörpers (7) entspricht.

**Claims**

1. A system for meeting the energy demand of a room in a building whose rooms are supplied with artificial light by lighting units disposed preferably on the ceiling and with daylight through windows in at least one of the outside walls, the room being supplied with fresh air by means of a ventilation facility, the temeprature of the supply air being at most equal to the required room temperature, characterised in that the coefficient of heat transmission (the total k value $k_F$) of the entire window (4) and the coefficient of heat transmission ($k_W$) of the opaque parts of the outside walls (3) of the building are each at most equal to 1 W/m² · K; and the supply air, which is distributed over at least one of the walls (18) of the room (2), is supplied (11) near the floor (9) and the rate of injection of supply air into the room (2) is at most 0.2 m/sec.

2. A system according to claim 1. characterised in that the maximum temperature of the supply air is 22°C and the injection rate is 0.15 m/sec.

3. A system according to claim 1 or 2, characterised in that the waste air extractor (16) of the ventilation facility (11-17) is disposed in the ceiling (5) near the or each outside wall and extends over at least 80% of the width thereof.

4. A system according to any of the previous claims, characterised in that electric heating bars (8) are also disposed in the lighting units (7) and their power corresponds at least substantially to the electrical power of the particular lighting unit (7) concerned.

**Revendications**

1. Système assurant la demande d'énergie d'un local dans un immeuble dont les locaux sont pourvus de lumières artificielles par des systèmes d'éclairage, de préférence répartis au plafond, et de lumière du jour par des fenêtres dans au moins un des murs extérieurs et sont alimentés en air amené frais à l'aide d'une installation de ventilation, la température de l'air frais conduit étant en plus égale à la température du local souhaitée, caractérisé en ce que le coefficient de transmission thermique (la valeur d'ensemble K-K$_F$) de l'ensemble des fenêtres (4) et le coefficient de transmission thermique (K$_W$) des parties de murs extérieurs non transparentes (3) de l'immeuble (1) au plus une valeur de 1 w/m$^2$ · K et en ce que la conduite de l'air amené (11) est répartie sur un au moins des murs extérieurs (18) du local (2) et s'effectue au niveau du sol (9) et en ce que la vitesse d'injection de l'air amené dans le local (2) ne dépasse une valeur maximale de 0,2 m/s.

2. Système selon la revendication 1, caractérisé en ce que la température maximale de l'air amené et la vitesse d'injection s'élèvent à respectivement 22°C et 0,15 m/s.

3. Système selon la revendication 1 ou 2, caractérisé en ce que l'aspiration de l'air d'évacuation (16) du système de ventilation (11-17) est installée dans le plafond à proximité du mur extérieur et s'étend sur au moins 80% de la largeur du mur extérieur.

4. Système selon l'une des revendications précédentes, caractérisé en ce que dans les corps d'éclairage (7) sont aménagés en supplément des cartouches chauffantes (8) électriques dont la puissance électrique correspond au moins à peu près à celle des corps d'éclairage (7) correspondants.